# EUROPÄISCHE PATENTSCHRIFT

(11) **EP 4 274 036 B1**
(45) Veröffentlichungstag und Bekanntmachung des Hinweises auf die Patenterteilung: **18.02.2026**
(21) Anmeldenummer: 23164717.3
(22) Anmeldetag: 28.03.2023
(51) Int. Cl.: H01R 43/055, B65G 47/04

(54) **WERKZEUG ZUR KABELKONFEKTION UND VERWENDEN ZUMINDEST EINES SENSORS ZUR POSITIONSBESTIMMUNG AN EINEM SOLCHEN**
TOOL FOR PRODUCING A CABLE AND USE OF AT LEAST ONE SENSOR FOR DETERMINING THE POSITION OF SUCH A TOOL
OUTIL DE CONFECTION DE CÂBLE ET UTILISATION D'AU MOINS UN CAPTEUR POUR DÉTERMINER LA POSITION SUR UN TEL OUTIL

(30) Priorität: 02.05.2022 DE 102022110681
(43) Veröffentlichungstag der Anmeldung: 08.11.2023
(73) Patentinhaber: MD ELEKTRONIK GmbH, 84478 Waldkraiburg (DE)
(72) Erfinder: Oberreitmeier, Georg, 84562 Mettenheim (DE); Wallner, Markus, 83561 Ramerberg (DE); Huber, Hubert, 83527 Kirchdorf (DE); Lang, Walter, 84478 Waldkraiburg (DE)

(56) Entgegenhaltungen:
- EP-A1- 1 897 185
- EP-B1- 1 897 185
- CN-A- 106 329 289
- CN-A- 108 879 282
- CN-U- 215 816 778
- DE-A1- 102007 053 088
- JP-B2- 3 723 040

## Beschreibung

### Technisches Gebiet

Die Erfindung betrifft ein Werkzeug zur Kabelkonfektion und das Verwenden zumindest eines Sensors zur Positionsbestimmung an einem Werkzeug zur Kabelkonfektion, insbesondere einem Crimpwerkzeug.

### Stand der Technik

In automatisierten Anlagen zur Kabelkonfektion wird eine sogenannte Vorschubabfrage des Werkzeugs, insbesondere eines Crimpwerkzeugs, durchgeführt, um sicherzustellen, dass ein Vorschub des Rohwaren- bzw. Kontaktträgerstreifens stattgefunden hat. Die Vorschubabfrage umfasst dabei ein berührungsloses Abfragen oder Bestimmen der Position eines Vorschubzylinders oder Schiebeblocks, der sich zumindest zwischen einer Grundstellung und einer Arbeitsstellung bewegen kann. Zum berührungslosen Abfragen der Position werden im Stand der Technik Magnetsensoren verwendet. Für die Verwendung von Magnetsensoren muss der Vorschubzylinder oder Schiebeblock mit eingebauten Magneten ausgestattet sein. Alternativ werden im Stand der Technik induktive Sensoren verwendet, die keine Magnete benötigen. Der oder die Sensoren sind fest an einem Rahmen eines Vorschubs angeordnet und detektieren die Anwesenheit eines Teils des bewegbaren Kontaktvorschubs.

Die Druckschrift WO 2007/005433 A1 betrifft eine Zuführvorrichtung, die für die Verwendung mit einer Crimpmaschine mit einem Crimpwerkzeug eingerichtet ist. Die Zuführvorrichtung umfasst einen Rahmen, der so eingerichtet ist, dass er in der Nähe eines Crimpbereichs des Crimpwerkzeugs angeordnet ist, und einen Vorschubwagen, der verschiebbar am Rahmen montiert ist. Der Vorschubwagen ist in einer Crimpkontaktzuführrichtung in eine vorgeschobene Position bewegbar. Ein elektrischer Antrieb ist am Rahmen montiert und mit dem Vorschubwagen verbunden. Der Antrieb fährt den Vorschubwagen in Crimpkontaktzuführrichtung in die vorgeschobene Position, um einen Crimpkontakt in dem Crimpbereich zu positionieren. Eine Sensorvorrichtung wird bereitgestellt, die jeweils von einer vorderen und einer hinteren Stützplatte am Rahmen getragen wird. Ein Sensorarm erstreckt sich durch eine Sensorvorrichtungsöffnung im Körper des Vorschubwagens und interagiert mit einem Sensor, der ebenfalls in der Sensorvorrichtungsöffnung angeordnet ist.

Der Stand der Technik weist zumindest einen der folgenden Nachteile auf: Zum einen kann durch die Magnete im Vorschubzylinder ein Magnetfeld aufgebaut werden, das eine Werkzeugsteuerung negativ beeinflusst. Anders herum entsteht ein elektrisches Feld, sobald an einem Gerät oder einer Stromleitung eine Spannung anliegt. Die Spannung ist die Voraussetzung dafür, dass elektrischer Strom fließen kann, wenn ein Gerät eingeschaltet wird. Wenn Strom fließt, entsteht zusätzlich ein Magnetfeld. Dieses Magnetfeld wirkt störend auf die Magnetsensoren am Vorschub. Zum anderen müssen bei einer Neujustierung des Kontaktvorschubs, zum Beispiel beim Anpassen an Rohwaren- oder Produktunterschiede, auch der oder die Sensoren neu justiert werden, was einen unerwünschten und zeitaufwendigen manuellen Prozessschritt darstellt.

### Beschreibung der Erfindung

Es ist daher eine Aufgabe der vorliegenden Erfindung eine Vorrichtung und ein Verfahren bereitzustellen, die eine effektivere und schnellere Kabelkonfektion ermöglichen.

Die oben genannte Aufgabe wird durch ein Werkzeug nach Anspruch 1 und eine Verwendung nach Anspruch 7 gelöst. Weitere vorteilhafte Ausgestaltungsformen der Erfindung lassen sich den Unteransprüchen, der Beschreibung sowie den Zeichnungen entnehmen.

Insbesondere wird die oben genannte Aufgabe gelöst durch ein Werkzeug zur Kabelkonfektion aufweisend einen Vorschub mit einem Vorschubfinger zum Bewegen eines Trägerstreifens entlang einer Vorschubrichtung. Der Vorschub umfasst einen bewegbaren Schiebeblock, der eingerichtet ist eine Relativbewegung gegenüber dem Vorschub durchzuführen, um den Vorschubfinger entlang der Vorschubrichtung zu bewegen, wobei zumindest ein Sensor an dem bewegbaren Schiebeblock angeordnet ist, um die Position des Schiebeblocks zu bestimmen.

Das vorliegende Werkzeug hat zumindest den Vorteil, dass bei einem Neujustieren des Vorschubs bzw. des Vorschubfingers und damit des Schiebeblocks kein Neujustieren des oder der Sensoren notwendig ist. Dadurch entfällt ein unnötiges manuelles Neujustieren des oder der Sensoren und die Kabelkonfektion wird effektiver und schneller. Weiterhin kann das vorliegende Werkzeug ohne großen Aufwand aus einem bestehenden Werkzeug erzeugt werden bzw. können bestehende Systeme ohne großen Aufwand zu einem vorliegenden Werkzeug umgerüstet werden. Dadurch ist das vorliegende Werkzeug leicht einsetzbar. Darüber hinaus sind im Stand der Technik (Magnet-)Sensoren meist an einer Rückseite des Crimpwerkzeuges angebracht und deswegen schlecht zugänglich, wenn das Crimpwerkzeug in einer Anlage verbaut ist. Bei dem vorliegendem Crimpwerkzeug sind die Sensoren bevorzugt an einer Oberseite der Vorschubeinheit bzw. des Vorschubs angeordnet und dadurch besser zugänglich. Im Fall einer notwendigen Korrektur am Sensor, z.B. einer Korrektur der Sensor-Grundposition, muss das Crimpwerkzeug somit nicht ausgebaut werden. Die Grundposition des oder der Sensoren lässt sich also schneller korrigieren. Wird ein Sensor mit einer LED verwendet, so kann weiterhin der Schaltzustand des oder der Sensoren schneller und ohne Hilfsmittel (z.B. Spiegel) an der LED abgelesen werden. Schließlich lässt sich der Schaltabstand, also der Abstand zwischen Sensor und Positionsanschlag, schnell überprüfen und einstellen. Dies ist bei (Magnet-)Sensoren aus dem Stand der Technik nicht oder nur beschränkt möglich. Die Relativbewegung des Schiebblocks gegenüber dem Vorschub umfasst insbesondere eine Relativbewegung des Schiebeblocks gegenüber und/oder entlang einer Blockführung am Vorschub.

Bevorzugt umfasst der zumindest eine Sensor einen induktiven Sensor. Ein induktiver Sensor benötigt keine Magneten, so dass durch die Verwendung eines induktiven Sensors keine Magnetfelder auftreten, die andere Elektronik ungewollt negativ beeinflussen können. Anders herum sind induktive Sensoren auch nicht sensibel für Magnetfelder und können durch solche nicht negativ beeinflusst werden. Je nach verwendeten induktiven Sensoren und deren Sensorqualität kann die Schalthysterese bei den induktiven Sensoren kleiner, und somit genauer gegenüber Magnetsensoren sein. Neben der Verwendung von induktiven Sensoren ist auch die Art und Weise des Einbaus der Sensoren weniger anfällig gegenüber Magnetfeldern.

Bevorzugt umfasst die Relativbewegung (RB) eine reziproke Bewegung. Eine reziproke Bewegung des Schiebeblocks bedeutet im Wesentlichen eine hin-und-her Bewegung. Die reziproke Bewegung kann auch eine kreisförmige Bewegung umfassen, wobei es nicht auf eine exakte Bewegung entlang einer Kreisbahn, sondern auf einen geschlossenen Bewegungskreis ankommt. Die reziproke Bewegung dient einem wiederholten Ablauf von einem oder mehreren Prozessschritten. Die Wiederholung ist zuverlässig und vorbestimmbar.

An, entlang der Richtung der Relativbewegung, gegenüberliegenden Seiten des bewegbaren Schiebeblocks ist jeweils zumindest ein Sensor angeordnet. In der Praxis bewegt sich der Schiebeblock bevorzugt zwischen zwei Endlagen hin und her. Dabei kann ein Sensor zur Abfrage oder Bestimmung des Schiebeblocks an einer ersten Position oder Endlage, und ein weiterer Sensor zur Abfrage oder Bestimmung des Schiebeblocks an einer zweiten Position verwendet werden. Die Anordnung ermöglicht ein Bestimmen der Position des Schiebeblocks in der ersten Position oder der zweiten Position. Die erste Position kann zum Beispiel den Punkt "Kontakt holen" und die zweite Position den Punkt "Kontakt verschoben" umfassen. Über die Positions- oder Endlagebestimmung kann ein Prozessablauf überwacht und gesteuert werden. Der Ausdruck "entlang der Richtung der Relativbewegung" kann beide entgegengesetzte Richtungsverläufe umfassen.

Bevorzugt ist der zumindest eine Sensor in einer Vertiefung an dem bewegbaren Schiebeblock angeordnet. Die Anordnung des zumindest einen Sensors in einer Vertiefung ist platzsparend und schützt den Sensor vor ungewollten äußeren Beschädigungen. Die Vertiefung hat dabei keine negativen Einflüsse auf die Struktur oder Mechanik des Schiebeblocks. Weiterhin ist es durch die Anbringung der Sensoren in einer Vertiefung möglich, die Sensorlängsachse schräg, insbesondere im 90° Winkel, zu den Positionsanschlägen auszurichten.

Bevorzugt wird der zumindest eine Sensor mittels einer Halterung in der Vertiefung gehalten. Die Halterung stellt die Grundposition des Sensors, also den Abstand zwischen Sensor und Positionsanschlag, sicher. Weiterhin ermöglicht die Halterung ein stabiles Halten des Sensors in einer Vertiefung. Die Halterung schützt den Sensor dabei auch vor mechanischen Beanspruchungen beim Einlegen oder Anordnen in der Vertiefung. Die Halterung kann eine zusätzliche Fixierung, wie eine Klemmung, des Sensors umfassen. Die zusätzliche Fixierung kann die Anordnung des Sensors in der Vertiefung, insbesondere bei schnellen und/oder ruckartigen Bewegungen, beständiger machen.

Die Positionsbestimmung erfolgt in Bezug auf Positionsanschläge an dem Vorschub. Die Positionsanschläge dienen als Referenzpunkte. Ist der Abstand zu einem vorbestimmten Positionsanschlag Null oder nahezu Null, so befindet sich der Schiebeblock in einer vorbestimmten Grund- oder Arbeitsstellung. In der Praxis bewegt sich der Schiebeblock bevorzugt zwischen der Grund- und der Arbeitsstellung hin und her. Die jeweilige Endposition kann mittels der Positionsanschläge eingestellt werden. Unabhängig davon kann die Sensorposition mittels einer Halterung eingestellt werden, dies entspricht der Grundposition des Sensors. Liegt der Schiebeblock (auch Vorschubschlitten genannt) an einem Positionsanschlag an, ist bevorzugt eine der beiden Positionen, d.h. Grund- oder Arbeitsstellung, erreicht. Zwischen einem Sensor und einem Positionsanschlag kann sich jedoch ein minimaler Luftspalt, ein sogenannter Schaltspalt, befinden. Das Bestimmen der Position des Schiebeblocks kann weitere Prozessschritte einleiten. In der Praxis kann es zum Beispiel sein, dass sich der Schiebeblock in der Grundstellung befinden muss, um den nächsten Schritt in der Maschinenablaufsteuerung zu erreichen. Ein nächster Schritt kann zum Beispiel das Auslösen eines Crimpzykluses sein.

Bevorzugt ist zumindest ein Positionsanschlag an einem Umkehrpunkt der Relativbewegung des bewegbaren Schiebeblocks angeordnet. Der zumindest eine Positionsanschlag verhindert eine Weiterbewegung des Schiebeblocks in die jeweilige Richtung und bildet somit einen Umkehrpunkt der Relativbewegung des Schiebeblocks. Durch seine Größe ist der Positionsanschlag als Referenzpunkt geeignet, da ein deutliches Schaltsignal in einem induktiven Sensor bewirkt werden kann. In der Praxis ändert ein Sensor seinen Schaltzustand, wenn ein Positionsanschlag im Detektionsbereich des Sensors liegt. Die Änderung des Schaltzustands wird als Erreichen der entsprechenden Endlagenposition interpretiert.

Die oben genannte Aufgabe wird weiterhin insbesondere gelöst durch eine Verwendung zumindest zwei Sensoren zur Positionsbestimmung an einem Werkzeug zur Kabelkonfektion, das einen Vorschub (10) mit einem Vorschubfinger (12) zum Bewegen eines Trägerstreifens (2) entlang einer Vorschubrichtung (X) aufweist, wobei die zumindest zwei Sensoren an, entlang der Richtung einer Relativbewegung, gegenüberliegenden Seiten an einem bewegbaren Schiebeblock des Vorschubs angeordnet sind, und die Positionsbestimmung in Bezug auf Positionsanschläge an dem Vorschub erfolgt. Die Positionsbestimmung kann zur Prozesssicherheit beitragen, indem bestimmte Prozessschritte erst erfolgen, wenn das bewegbare Bauteil eine bestimmte Position eingenommen oder überschritten hat. Die Anordnung zwei Sensoren, die zur Positionsbestimmung verwendet werden, an dem bewegbaren Bauteil, hat den Vorteil, dass eine Neupositionierung des bewegbaren Bauteils, insbesondere eine Neupositionierung von zumindest einem Positionsanschlag, keine Neupositionierung des Sensors erfordert.

Die folgende Beschreibung von Ausführungsbeispielen erfolgt unter Bezugnahme auf die begleitenden Figuren. Dabei zeigen:
- Fig. 1: eine perspektivische Darstellung einer Ausführungsform eines Werkzeugs; und
- Fig. 2: eine Draufsicht auf den Schiebeblock und angrenzende Teile aus Fig. 1.

Im Folgenden werden Ausführungsbeispiele im Detail mit Bezug auf die Figuren beschrieben.

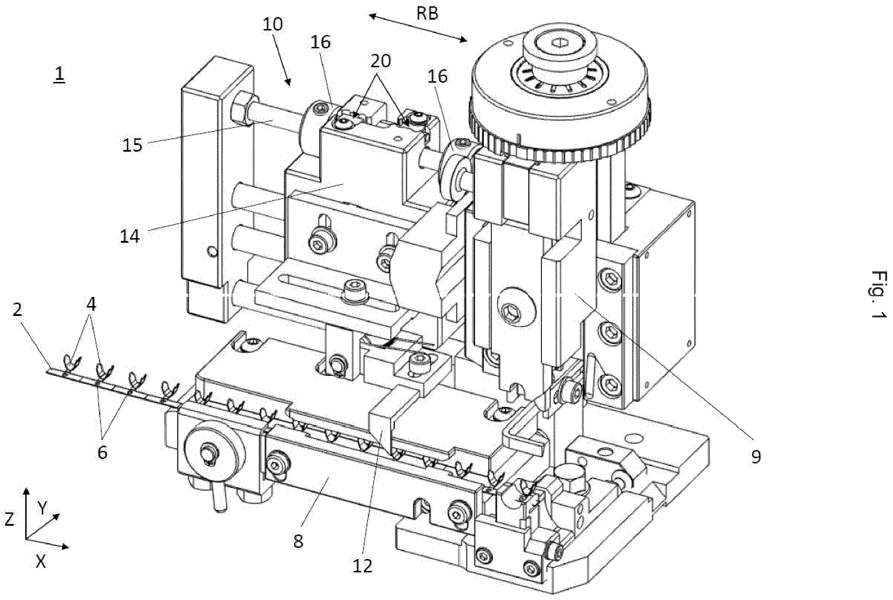

Fig. 1 zeigt ein Ausführungsbeispiel eines Werkzeugs 1 zur Kabelkonfektion. Das Werkzeug 1 weist in der dargestellten Ausführungsform eine Führung 8 zum Führen eines Trägerstreifens 2, einen Vorschub 10 mit einem Vorschubfinger 12 zum Bewegen des Trägerstreifens 2 entlang einer Vorschubrichtung X, und ein Bearbeitungsmodul 9, insbesondere ein Crimpmodul, auf.

Der Vorschub 10 umfasst weiterhin einen bewegbaren Schiebeblock 14. Der dargestellte Schiebeblock 14 ist eingerichtet eine Relativbewegung RB gegenüber dem Vorschub, d.h. insbesondere eine hin-und-her oder reziproke Bewegung, zwischen zwei Umkehrpunkten durchzuführen. Aufgrund der reziproken Bewegung kann der Schiebeblock 14 den Trägerstreifen 2 mit Hilfe des Vorschubfingers 12 entlang der Vorschubrichtung X bewegen. Durch die Bewegung entlang der Vorschubrichtung X kann der Trägerstreifen 2 zum Beispiel von einem Speicher oder einem vorhergehenden Prozessschritt für eine Bearbeitung an dem Bearbeitungsmodul 9 zugeführt werden.

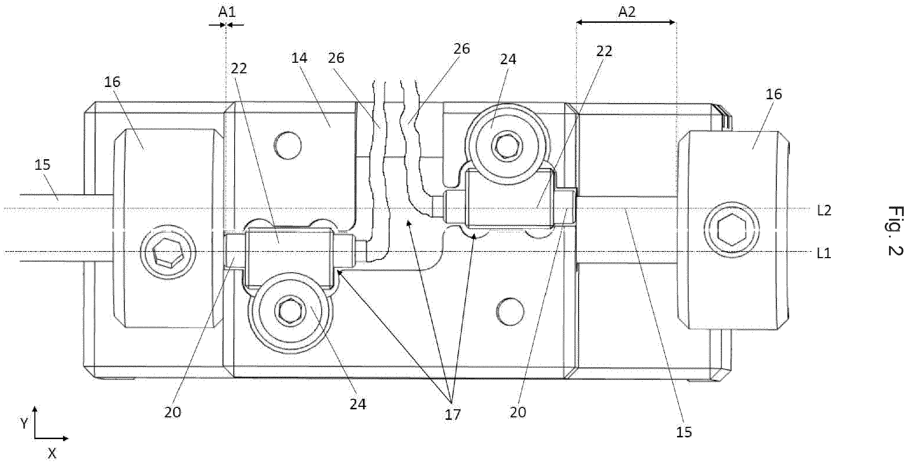

Der bewegbare Schiebeblock 14 weist zumindest einen Sensor 20 auf, mit dem die Position des Schiebeblocks 14 bestimmt werden kann. Fig. 2 zeigt eine Draufsicht auf den Schiebeblock 14 und angrenzende Teile. In der dargestellten Ausführungsform umfasst der Schiebeblock 14 zwei Sensoren 20. Die Sensoren 20 sind bevorzugt induktive Sensoren zum Bestimmen, ob der Schiebeblock eine erste oder eine zweite Position bzw. eine Grund- oder eine Arbeitsstellung erreicht hat. Die Sensoren 20 sind in Richtung der reziproken Bewegung RB, an gegenüberliegenden Seiten des bewegbaren Schiebeblocks 14 angeordnet.

Weiterhin ist jeweils ein Positionsanschlag 16 an jedem Umkehrpunkt der reziproken Bewegung RB des bewegbaren Schiebblocks 14 angeordnet. Mit Hilfe der beiden Sensoren 20 kann eine Positionsbestimmung des Schiebeblocks 14 in Bezug auf die Positionsanschläge 16 erfolgen.

In der dargestellten Ausführungsform sind die beiden Sensoren 20 in einer Vertiefung 17 am bewegbaren Schiebeblock 14 angeordnet. Insbesondere werden die beiden Sensoren 20 mittels jeweils einer Halterung 22 in der Vertiefung 17 gehalten. Die Vertiefung 17 wurde durch Fräsen in den Schiebeblock 14 eingebracht. In alternativen Ausführungsformen können andere Bearbeitungsverfahren zum Erzeugen der Vertiefung 17 verwendet werden. Die Vertiefung 17 kann auch mehrere Vertiefungen umfassen. Die Tiefe der Vertiefung 17 ist bevorzugt so gewählt, dass nichts von den Sensoren 20, d.h weder die Sensoren 20 selbst, noch deren Halterung 22, über die Vertiefung 17 übersteht. Die Vertiefung 17 bietet Platz für die verwendeten Sensoren 20 und eine eventuelle Verkabelung 26, über die die Sensoren 20 zu einer Steuereinrichtung (nicht gezeigt) angeschlossen sein können. Eine Halterung 22 kann als Klemmelement ausgebildet sein. Bei einem Klemmelement ist eine Halterung 22 bevorzugt einstückig ausgebildet und mit einem Schlitz versehen, so dass ein bevorzugt zylinderförmiger Sensor 20 klemmend in der Halterung 22 gehalten werden kann. Das Klemmelement kann aus Kunststoff hergestellt sein. Ein Klemmelement aus Kunststoff ist einfach zu fertigen, leicht und robust. Bevorzugt ist die Vertiefung 17 so gebildet, dass die Halterungen 22 formschlüssig gehalten werden können. Darüber hinaus kann der Schiebeblock 14 Befestigungsmittel 24, wie Schrauben, aufweisen, mit denen jede Halterung 22 an ihrem Platz in der Vertiefung 17 gehalten wird. Die Befestigungsmittel 24 schützen die Sensoren insbesondere vor einem ungewollten lösen oder herausfallen aus dem Schiebeblock 14, zum Beispiel aufgrund der ruckartigen Bewegungen im Betrieb. Die Halterungen 22 legen auch die Grundposition der Sensoren 20 fest.

Die Sensoren 20 können zur Positionsbestimmung an einem Werkzeug 1 zur Kabelkonfektion verwendet werden. Dabei sind die Sensoren 20 an einem bewegbaren Bauteil, insbesondere einem Schiebeblock 14 eines Vorschubs 10, angeordnet. In der dargestellten Ausführungsform bestimmen die Sensoren 20 das Erreichen einer Endlage oder Position des Schiebeblocks 14. Dabei werden im Wesentlichen drei Positionen unterschieden: Das Erreichen einer ersten Endlage, z.B. der Grundstellung, das Erreichen einer zweiten Endlage, z.B. der Arbeitsstellung, und eine beliebige Lage dazwischen. Die Zuordnung der ersten und/oder zweiten Position zur Grund- und/oder Arbeitsstellung kann beliebig vorbestimmt werden. Die beiden Sensoren 20 können, wie in Fig. 2 dargestellt auf einer ersten Linie L1 und einer davon verschiedenen zweiten Linie L2 angeordnet sein. In einer alternativen Ausführungsform können beide Sensoren 20 auf einer Linie angeordnet sein. Die Anordnung kann je nach verfügbarem Platz und/oder guter Erreichbarkeit bei der Montage erfolgen. Die Sensoren 20 können auch an Seitenflächen des Schiebeblocks 14, bevorzugt an einer Vorderseite des Schiebeblocks 14 (in Bezug auf die Darstellung in Fig. 1), angebracht werden.

Im Betrieb wird ein in die Führung 8 eingelegter Trägerstreifen 2 mit Hilfe des Vorschubfingers 12 in Vorschubrichtung X bewegt. Der Vorschubfinger 12 greift dazu in Pilotlöcher 6 an dem Trägerstreifen 2 ein und bewegt sich eine vorbestimmte Distanz in Vorschubrichtung X. Durch die Bewegung wird der Trägerstreifen 2 mit den daran befestigten Kontakten 4 (Rohware) in Richtung zum Bearbeitungsmodul 9 bewegt. Danach löst der Vorschubfinger 12 seinen Eingriff und bewegt sich in die entgegengesetzte Richtung, um am Ausgangspunkt erneut in ein Pilotloch 6 einzugreifen. Insgesamt ist der bewegbare Schiebeblock 14 eingerichtet eine reziproke Bewegung RB durchzuführen, um den Vorschubfinger 12 wiederholend entlang der Vorschubrichtung X zu bewegen.

An dem Bearbeitungsmodul 9, das in der dargestellten Ausführungsform ein Crimpmodul umfasst, kann ein Kontakt 4 vom Trägerstreifen 2 getrennt und an eine Leitung (nicht gezeigt) gecrimpt werden. Die Distanz der Bewegung des Trägerstreifens 2 während eines Vorschubs entspricht bevorzugt einem Abstand von zwei benachbarten Kontakten 4 oder Pilotlöchern 6 an dem Trägerstreifen 2, so dass durch die Bewegung die Kontakte 4 am Trägerstreifen 2 nacheinander der Bearbeitungsstation 9 zugeführt werden. In der Praxis kann es zweckmäßig sein, dass, wenn ein neuer Kontakt 4 "geholt" werden soll, der Vorschubfinger 12 weiter weg von dem Bearbeitungsmodul 9 fährt als es die Pilotlochposition vorgibt. Dadurch werden Schwankungen bezüglich des Kontaktvorschubs bzw. -position ausgeglichen und ein Einrasten des Vorschubfingers 12 im Pilotloch 6 begünstigt.

Je nach verwendeter Rohware bzw. dem Abstand zwischen zwei benachbarten Pilotlöchern 6 muss die reziproke Bewegung RB des Schiebeblocks 14, welche die Bewegung des Vorschubfingers 12 bestimmt, neu justiert werden. Für die Neujustierung kann zumindest einer der Positionsanschläge 16 an der Blockführung 15 entsprechend ausgerichtet werden, so dass die reziproke Bewegung RB des Schiebeblocks 14 entlang der Blockführung 15 zwischen den zwei Positionsanschlägen 16 zu der Distanz der Pilotlöcher 6 am Trägerstreifen 2 passt. Eine Neujustierung kann auch durch Chargenschwankungen bezüglich der Rohware erforderlich sein. Da die Sensoren 20 lediglich das Erreichen des Schiebeblocks 14 an einem (in ihrem jeweiligen Messfeld liegenden) Positionsanschlag 16 (Referenzpunkt) erfassen, muss die Position der Sensoren 20 nicht verändert bzw. neu justiert werden. Wenn ein Positionsanschlag 16 erreicht wird schaltet der jeweilige Sensor 20 und gibt ein Anwesenheitssignal.

### BEZUGSZEICHENLISTE

- 1: Werkzeug
- 2: Trägerstreifen
- 4: Kontakte
- 6: Pilotlöcher
- 8: Trägerstreifenführung
- 9: Bearbeitungsmodul
- 10: Vorschub
- 12: Vorschubfinger
- 14: Schiebeblock
- 15: Blockführung
- 16: Positionsanschlag
- 17: Vertiefung
- 20: Sensor
- 22: Halterung
- 24: Befestigungsmittel
- 26: Verkabelung
- A1: erster Abstand
- A2: zweiter Abstand
- L1: erste Linie
- L2: zweite Linie
- RB: reziproke Bewegung
- X: Vorschubrichtung
- Y: zweite Richtung
- Z: dritte Richtung

## Patentansprüche

1. Werkzeug (1) zur Kabelkonfektion aufweisend:
a. einen Vorschub (10) mit einem Vorschubfinger (12) zum Bewegen eines Trägerstreifens (2) entlang einer Vorschubrichtung (X); und
b. der Vorschub (10) umfasst einen bewegbaren Schiebeblock (14), der eingerichtet ist eine Relativbewegung gegenüber dem Vorschub (RB) durchzuführen, um den Vorschubfinger (12) entlang der Vorschubrichtung (X) zu bewegen; wobei
c. zumindest ein Sensor (20) an dem bewegbaren Schiebeblock (14) angeordnet ist, um die Position des Schiebeblocks (14) zu bestimmen; **dadurch gekennzeichnet, dass**
d. an, entlang der Richtung der Relativbewegung (RB), gegenüberliegenden Seiten des bewegbaren Schiebeblocks (14) jeweils zumindest ein Sensor (20) angeordnet ist; und
e. die Positionsbestimmung in Bezug auf Positionsanschläge (16) an dem Vorschub (10) erfolgt.

2. Werkzeug (1) nach Anspruch 1, bei dem der zumindest eine Sensor (20) einen induktiven Sensor umfasst.

3. Werkzeug (1) nach Anspruch 1 oder 2, bei dem die Relativbewegung (RB) eine reziproke Bewegung umfasst.

4. Werkzeug (1) nach einem der Ansprüche 1 - 3, bei dem der zumindest eine Sensor (20) in einer Vertiefung (17) an dem bewegbaren Schiebeblock (14) angeordnet ist.

5. Werkzeug (1) nach Anspruch 4, bei dem der zumindest eine Sensor (20) mittels einer Halterung (22) in der Vertiefung (17) gehalten wird.

6. Werkzeug (1) nach einem der Ansprüche 1 - 5, bei dem zumindest ein Positionsanschlag (16) an einem Umkehrpunkt der Relativbewegung (RB) des bewegbaren Schiebeblocks (14) angeordnet ist.

7. Verwendung von zumindest zwei Sensoren (20) zur Positionsbestimmung an einem Werkzeug (1) zur Kabelkonfektion, das einen Vorschub (10) mit einem Vorschubfinger (12) zum Bewegen eines Trägerstreifens (2) entlang einer Vorschubrichtung (X) aufweist, wobei die zumindest zwei Sensoren (20) an, entlang der Richtung einer Relativbewegung (RB), gegenüberliegenden Seiten an einem bewegbaren Schiebeblock (14) des Vorschubs (10) angeordnet sind, und die Positionsbestimmung in Bezug auf Positionsanschläge (16) an dem Vorschub (10) erfolgt.

## Claims

1. Tool (1) for cable fabrication, having:
a. an advancement means (10) with an advancement finger (12) for moving a carrier strip (2) along an advancement direction (X); and
b. the advancement means (10) comprises a movable sliding block (14) which is configured to perform a relative movement (RB) with respect to the advancement means so as to move the advancement finger (12) along the advancement direction (X); wherein
c. at least one sensor (20) is arranged on the movable sliding block (14) so as to determine the position of the sliding block (14);
**characterized in that**,
d. on opposite sides of the movable sliding block (14) along the direction of relative movement (RB), there is arranged in each case at least one sensor (20); and
e. position is determined in relation to position stops (16) at the advancement means (10).

2. Tool (1) according to Claim 1, in which the at least one sensor (20) comprises an inductive sensor.

3. Tool (1) according to Claim 1 or 2, in which the relative movement (RB) comprises a reciprocal movement.

4. Tool (1) according to one of Claims 1-3, in which the at least one sensor (20) is arranged in a depression (17) in the movable sliding block (14).

5. Tool (1) according to Claim 4, in which the at least one sensor (20) is held in the depression (17) by means of a retaining means (22).

6. Tool (1) according to one of Claims 1-5, in which at least one position stop (16) is arranged at a reversal point for the relative movement (RB) of the movable sliding block (14).

7. Use of at least two sensors (20) for determination of position at a tool (1) for cable fabrication, said tool having an advancement means (10) with an advancement finger (12) for moving a carrier strip (2) along an advancement direction (X), wherein the at least two sensors (20) are arranged on a movable sliding block (14) of the advancement means (10), on opposite sides along the direction of a relative movement (RB), and position is determined in relation to position stops (16) at the advancement means (10).

## Revendications

1. Outil (1) destiné à la confection de câbles, comprenant :
a. un dispositif d'avance (10) pourvu d'un doigt d'avance (12) servant à déplacer une bande porteuse (2) le long d'une direction d'avance (X) ; et
b. le dispositif d'avance (10) comprend un bloc coulissant (14) mobile qui est conçu pour effectuer un mouvement relatif par rapport au dispositif d'avance (RB) afin de déplacer le doigt d'avance (12) le long de la direction d'avance (X) ;
c. au moins un capteur (20) étant disposé sur le bloc coulissant (14) mobile afin de déterminer la position du bloc coulissant (14) ;
**caractérisé en ce que**
d. au moins un capteur (20) est respectivement disposé au niveau des côtés opposés du bloc coulissant (14) mobile le long de la direction du mouvement relatif (RB) ; et
e. la détermination de la position s'effectue par rapport à des butées de position (16) situées sur le dispositif d'avance (10).

2. Outil (1) selon la revendication 1, avec lequel l'au moins un capteur (20) comprend un capteur inductif.

3. Outil (1) selon la revendication 1 ou 2, avec lequel le mouvement relatif (RB) comprend un mouvement alternatif.

4. Outil (1) selon l'une des revendications 1 à 3, avec lequel l'au moins un capteur (20) est disposé dans une cavité (17) au niveau du bloc coulissant (14) mobile.

5. Outil (1) selon la revendication 4, avec lequel l'au moins un capteur (20) est maintenu dans la cavité (17) au moyen d'un élément de maintien (22).

6. Outil (1) selon l'une des revendications 1 à 5, avec lequel au moins une butée de position (16) est disposée au niveau d'un point d'inversion du mouvement relatif (RB) du bloc coulissant (14) mobile.

7. Utilisation d'au moins deux capteurs (20) pour déterminer la position au niveau d'un outil (1) destiné à la construction de câbles, qui possède un dispositif d'avance (10) avec un doigt d'avance (12) servant à déplacer une bande porteuse (2) le long d'une direction d'avance (X), les au moins deux capteurs (20) étant disposés, le long de la direction d'un mouvement relatif (RB), sur des côtés opposés sur un bloc coulissant (14) mobile du dispositif d'alimentation (10) et la détermination de position étant effectuée par rapport à des butées de position (16) sur le dispositif d'alimentation (10).
